# EUROPEAN PATENT APPLICATION

(11) **EP 4 257 710 A1**
(43) Date of publication of application: **11.10.2023**
(21) Application number: 22167412.0
(22) Date of filing: 08.04.2022
(51) Int. Cl.: C22B 1/00, C22B 3/16, C22B 3/26, C22B 7/00, H01M 10/54

(54) **LITHIUM-ION BATTERY RECYCLING METHOD**

(71) Applicant: Niocycle Teknoloji Tic. San. A.S., Kocaeli (TR)
(72) Inventor: BOSNA, FATIH, Basel (CH); ULUHAN, TAHA, ISTANBUL (TR)
(74) Representative: Dentons UK and Middle East LLP

(57) **Abstract**

The present invention is related to a high-efficient and environmentally friendly recycling method of Lithium-Ion Batteries comprising disassembling the Lithium-Ion Batteries to obtain the Lithium-Ion Battery cell components, e.g. the cathode with its respective active material composition in high quantities and qualities for the further material recovery in hydrometallurgical process.

## Description

### Technical Field

The present invention is related to the recycling of Lithium-Ion Batteries; especially from applications of E-Mobility like electric vehicles but not limited to these and offers a highly efficient recycling method for Lithium-Ion Batteries achieving high recovery rates by effective pretreatment and hydrometallurgical procedures.

### State of the Art

Nowadays, Lithium-Ion Batteries (LiBs) are considered as exceptionally reliable and efficient technology for sustainable and green (electric) energy storage systems due to several reasons like high energy densities and power per unit of battery weight, allowing them to be lighter and smaller than other rechargeable batteries. New research and manufacturing methods for Lithium-Ion Batteries are providing increased storage capacities, faster charging speeds, and longer overall lifespans. Whereas new developments and innovations in this sector strongly rely on the availability and price of virgin raw materials that are mined in non-European and non-Mediterranean countries and primarily by foreign entities. Furthermore, the required raw materials for the manufacturing of new Lithium-Ion Batteries are limitedly available due to the finiteness and low reserves; whereby the risk of running out and demand overweighting the supply is already real to this day (e.g. in the case of Cobalt, Lithium and Nickel).

Additionally, from a sustainability perspective, raw materials like Cobalt (Co), Nickel (Ni), Manganese (Mn), and Lithium (Li) are extracted from natural minerals which require mining operations on great areas which in some cases are even farmlands or residential areas and use chemical hazardous treatments. These extraction operations are strongly contributing to the pollution of the environment and air with heavy metals and consume copious quantities of water. Also, use of high-throughput machines for extraction and processing leads to the emission of green-house gases. As a result, environmentally sustainable and economically viable recycling technologies are becoming a critical focus area as the global demand for Lithium-Ion Battery manufacturing grows. Therefore, alternative material sources for Lithium-Ion Batteries gain attention and importance in modern society, whereby recycling is one major technology that will be relevant in this case.

The state-of-the-art Lithium-Ion Battery recycling considers the recycling of Lithium-Ion Battery cathode active materials like compositions of Lithium- Nickel- Manganese- Cobalt - Oxide (NMC), Lithium- Cobalt - Oxide (LCO), Lithium-Manganese -Oxide (LMO) or Lithium-Nickel - Oxide (LNO) whereas other important components of a Lithium-Ion Battery pack are either unconsidered, badly recovered or destroyed. The recycling and recovery primarily focusses on winning cathode active materials due to the financial overpowering weight of the cathode materials. The recovery of the Lithium-Ion Battery materials can be done by recovering cathode materials compositions as a combination of products and compounds of the cathode active elements Nickel, Cobalt, Manganese, and Lithium with varying stoichiometry. This powder mixture of active material compounds with varying contents of chemical elements is an accumulation and often referred to as "black mass" wherein impurities of iron, phosphor, aluminum, copper, and plastics can still be present. It is important to emphasize that the initial cathode active materials, e.g. Nickel-Manganese-Cobalt, Lithium-Cobalt-Oxide, or Lithium-Ferrous-Phosphate (LFP) are not recycled and recovered as separate chemical pure elements but as collective chemical products/ compounds with some degree of impurities as precursor materials. Some recycling procedures recover elements but are only capable of reaching recycling efficiencies below 80% (under optimistic assumption) when the input material mass is considered to the output material mass (input mass vs. recovered mass of output materials). Anode materials and other implemented materials, e.g. metallic collectors, are also recovered however mostly in form of mixed and crushed powders which are recovered with a high impurity level and require additional purification steps.

The core process of current recycling methods resolves around "shredding/ crushing" as a mechanical pretreatment process in order to reduce the volume and gain a maximum of up to 75% of the mass of active materials implemented in Lithium-Ion Batteries by crushing Lithium-Ion Batteries into small-sized pieces. For this, Lithium-Ion Battery modules (with casings, plastics, adhesives, connectors, battery cells, etc.) are reduced by shredding down to micrometer particle size before separating the dissimilar materials of the received powder mixture, e.g. into the active materials of cathode, anode, and collector materials. During this process, the materials experience high stresses, temperatures, and forces whereby some particles get incinerated, destroyed, or irreversibly altered that no recycling of these materials is possible. Most often, the mechanical pretreatment is not finished by utilizing a single crushing step but rather by at least 2 crushing process steps whereas some recycling methods have shown no improvement with 3 crushing process steps which are also available in the industry. Additionally, a complex sieving, cleaning and posttreatment process is required to obtain processable black mass after crushing.

Current recycling methods consider the following steps for the recovery of black mass:
Shredding as a pre-treatment with inorganic acid leaching and high complexity separation process:
- Discharging Lithium-Ion battery pack
- Opening Lithium-Ion Battery pack and separate Lithium-Ion Battery modules
- Shredding of whole Lithium-Ion Battery modules (with metals, plastics, etc.)
- Magnetic Separation/ Flotation/ Filtration/ Extraction of metal and plastic mass
- Cleaning of powder with leaching process using inorganic acids
- Extraction of black mass (e.g. NMC) or separating the materials with low reusability and recycling efficiency.

Dismantling as a pre-treatment with inorganic acid leaching and without further separation process of elements:
- Discharging of Lithium-Ion Battery pack
- Opening Lithium-Ion battery pack and dismantling Lithium-Ion battery modules
- Opening Lithium-Ion modules and dismantling down to Lithium-Ion battery cells
- Opening the Lithium-Ion battery cells
- Washing the Lithium-Ion cells in liquids to remove electrolyte
- Separation of cathode and anode (active material + collector foil)
- Leaching cathode active material with high-pressure inorganic acids stream to separate active material from collector
- Cleaning of active material
- Extraction of black mass (e.g. NMC)

An example of such an application is disclosed in the published patent application CN108285977A. The application discloses a method for recycling waste Lithium-Ion Battery positive electrode materials. The method comprises the steps of discharging the Lithium-Ion battery, disassembling it, and crushing the Lithium-Ion battery to obtain the positive electrode piece, a leaching process, and a drying process. In this method, the materials are crushed, whereby different metals need to be extracted before leaching which increases the impurity of the materials.

The disadvantages of the recycling processes to gain active materials as black mass and their applied process steps will be managed separately below:
Shredding: Due to the mechanical procedure with high forces, pressures and stresses the input materials are crushed, milled, and in local extreme positions incinerated. Additionally, by applying an inertia medium (to suppress electrical discharges during shredding, or other undesired reactions), the shredding mechanism leads to the destruction and incineration of critical raw materials yielding high material losses between 20% to 40%, whereby valuable materials are lost. Therefore, the recycling efficiency of the system "battery to material" only has an efficiency of lower than 80%. This means, that 1 ton Lithium-Ion Battery (NMC) input material relates to an economic loss of up to 1' 150 € in terms of current raw material values. With a conservative calculation of available Lithium-Ion Battery recycling materials of up to 3'000'000 tons in 2030, this relates to an economic loss of up to 3.45 billion € in terms of material values. Knowing that the raw materials (resources and reserves) for the manufacturing of Lithium-Ion Batteries are limited and the demand for Lithium-Ion Batteries is exponentially increasing in the next years, the application of shredders is neither economically nor ecologically profitable or advisable in the long-term perspective. Furthermore, shredding of Lithium-Ion Batteries is not a clean technology that offers reusable products for the Lithium-Ion Battery industry. The powder that is achieved by single stage shredding is often insufficient, whereby multi-step shredding is often applied. Additionally, the powder has a high impurity level, whereby multiple post-treatment methods are required, like flotation, magnetic separation, multistep sieving, etc., that increase the number of process steps, complexity, operation costs and reduce the final yield.

Dismantling and inorganic leaching to win black mass: In the state-of-the-art methods, the leaching step is combined with the separation step where the cathode active material is separated from the collector by applying (high-pressure) inorganic acid streams. While this procedure might require less time due to the combination of 2 process steps in one (active material separation from collector and leaching), more material is lost due to the strong impact and scatter of separated materials dissolved in the liquid phase, additional impurities are introduced due to the strong interactions with the metallic collector, whereby no efficient material recovery is present. A cleaning/ purification step is required after this leaching process (often in form of filtration or sieving), where the dissolved cathode active material is collected and dried, whereby the black mass, an accumulation/ compound of the active materials, is obtained.

Low quality recovered material/ final product or only precursor: Another major disadvantage of the shredding and separating down to black mass or manual dismantling and separating down to black mass procedures is the fact that the final product or recovered material is a composition of dissimilar materials of unknown properties, pureness, and mix of different chemical elements, products, and compounds. Therefore, the properties of the final black mass strongly depend on the input cathode active materials. Obtaining only black mass is heavily limiting the usability of the output materials since the cathode active material chemistries have different ratios/ stoichiometric compositions, e.g. in case of N:M:C = 1:1:1 or 8:1:1 or 5:3:2. This means that dismantling or shredding the input material in a recovery/ recycling process of active materials only down to the NMC level is only feasible when the same active material chemistry (ratio) is being used in order to build new cathodes; thereby also limiting the use of only one fixed input material chemistry. Therefore, an ideal recycling process with the battery input stream based on NMC 1:1:1 active material is able to yield a black mass of nearly NMC 1:1:1 chemistry that can be used for the manufacturing of Lithium-Ion Batteries with a cathode active material chemistry of NMC 1:1:1. However, this assumption is only valid if the preceding leaching process is tailored to maximize the leaching capacities for the cathode active materials by recovering almost 100% of the input elements Nickel, Manganese, Cobalt, Lithium when for example an input Lithium-Ion Battery-NMC was used. Otherwise, the final ratio of elements would vary and cannot ensure a final product with the desired chemistry ratio. In all other cases with mixed input materials, the final mixture of black mass with cathode active materials of various chemistries can hardly or not be used for the manufacturing of Lithium-Ion Batteries. Furthermore, the recovered black mass cannot be completely utilized for building new Lithium-Ion battery cells with a share of recycled/ recovered materials of 100% but is limited down to a share of currently 10% in combination with 90% new virgin materials, assuming a high purity of the recycled materials, which is often not achieved.

Hazardous gas and wastewater production due to the usage of inorganic acids in the leaching process: The usage of inorganic leaching agents to recover the Lithium-Ion Battery materials is a common factor for both processes leading to the development and emission of hazardous gases and fluids that are dangerous to humans and nature which is partly caused by the impure pretreatment and its affiliated post-pretreatments to obtain the black mass. This, furthermore, adds to the environmental pollution by hazardous agents that additionally can lead to the poisoning of the working staff. Beyond that, the usage of hazardous agents requires high active and passive safety and health standards for the operators and working staff, which are hardly met by recycling facilities.

### Brief Description and Objects of the Invention

The present invention solves the following problems and challenges of the current state-of-the-art solutions for recycling Lithium-Ion Batteries (for the ones given in the state-of-the-art section and others that were not mentioned above):
- High waiting/ dead times due to discharging procedure: the state-of-the-art discharging measures use different discharging methods to ensure a safe or not dangerous amount of residue voltage left in the energy system/ Lithium-Ion Battery of lower than 0.5 V whereby this procedure is laid out for either Lithium-Ion Battery pack or Lithium-Ion Battery module. However, the voltage of the Lithium-Ion Battery experiences a voltage recovery after some time and reaches voltage levels of up to 40 V whereby the Lithium-Ion Battery pack/ module needs to be short-circuited after discharging for up to 48 hours as waiting/ dead time before processing it further. Alternatively, the Lithium-Ion Batteries can be discharged in chemical or wet discharging methods by using corrosive and aggressive media, whereby the electrochemical potential of the Lithium-Ion Batteries is reduced and cut off. However, this method is very slow, uses inorganic and toxic agents, leads to pollution and hazardous gas emissions and is mainly applicable for Lithium-Ion Battery cells. Furthermore, the chemical discharging corrodes the Lithium-Ion Batteries from the outside to the inside, leads to decreased final material yields and qualities, introduces further impurities, and requires posttreatment steps for the cleaning. Additionally, all currently established state-of-the-art discharging methods are extremely limited by the variety and difference of Lithium-Ion Battery packs, modules and cells and can often only manage a small fraction of this diverse industry leading to long processing and planning times. This invention, however, will implement an innovative and automated fast-discharging route that is able to handle different builds of Lithium-Ion Batteries (Lithium-Ion Batteries from different manufacturers, sizes, and shapes) at different stages (pack, module, cell) and overcome the long waiting/ dead times of up to 48 hours by decreasing the discharging process time down while no additional waiting time will be necessary. The invention will use electrical discharging methods and not rely on wet chemical discharging methods.
- High yield loss due to shredding: the state-of-the-art recycling methods use shredding as mechanical separation and grinding process to obtain the desired cathode active materials or valuable materials inside the Lithium-Ion Batteries, like Lithium, Cobalt, Nickel, Manganese. Shredding is used and considered a fast and common dismantle method to get the Lithium-Ion Battery modules or implemented materials down to particle size and obtain a mixture whereby a material loss of up to 40% is accepted. The present invention will use high-efficient, automated, and parallelizable (modular) disassembling measures to preserve the maximum possible rate of implemented materials of the input Lithium-Ion Battery packs, modules, and cells (e.g. case, cables, plugs, battery management system, etc.). However, the main objective of the invention is the achievable high quantity and quality of cathode active materials by discarding the use of strong mechanical crushing processes as well as chemical discharging and relying on part-by-part separation steps, that include the dismantling of Lithium-Ion Battery packs to modules to cells to cell components whereby high purity materials are obtained for further recycling processing without the need for powder posttreatment steps.

- Other Lithium-Ion Battery materials/ parts are recovered as powders or shredded parts: the state-of-the-art recycling methods use shredding to obtain black mass of varying chemistry and compositions due to the use of different input materials or black mass of single chemistry when the same Lithium-Ion Battery models are being used. Additionally, many materials are either completely or partly lost during the shredding process that are not considered cathode active materials, like the electrolyte, separator foil, parts of metallic casings, cables, polymers and more. The current established recycling processes that are based on shredding deem these materials and parts unnecessary, not worth, or too complex to recover for recycling Lithium-Ion Batteries and discard them with a total of at least 20% of the input mass. The present invention will use a disassembling route as describe above, whereby all parts will be preserved as much as possible and ideally as they were implemented whereby these parts do not require any further extensive preparation measures like methods to filter and sieve them from shredded masses. These other Lithium-Ion Battery parts will rather be sorted manually or automatically along the disassembly line into specific material containers where all similar parts will be collected and then prepared for further processing/ or sales without the need for material powder processing. This method therefore has an increased overall recycling share, further reduces the energy consumption and carbon gas emission by eliminating the need for the reproduction of Lithium-Ion Battery parts.
- Active materials are often only available as one powder accumulation or black mass limiting the economic significance and efficiency of recycling: The state-of-the-art solutions often use mechanical processes like shredding as well as inefficient measures to separate or extract the cathode active materials from the input materials. These methods or processes often only extract metal powders and black mass powder mixtures as final products from the recycling process. The recovered active material compounds inside the black mass have limited economical applications. Limited industrial sectors would benefit or be interested in the products from these processes since extensive purification or crystallization processes are needed whereby virgin materials are considered cheaper and easier to implement into the manufacturing chain. The recovered materials from current processes cannot be fully used in one product or as re-usable materials for the Lithium-Ion Battery production. The present invention for one uses highly pure input cathode active materials with exceptionally low impurities whereby no additional cleaning step is required, and the obtained cathode active powders can be chemically processed. Additional post-processing steps are provided that enable the chemical separation of the cathode active materials as individual chemical elements in high quantities and qualities which is mainly attributed to the more suitable, effective, and sustainable pretreatment of Lithium-Ion Batteries (packs, modules, calls) by disassembly them part-by-part wherein the part integrities are warranted.

- Chemical recovery of Lithium-Ion Battery cathode materials based on inorganic processing: The state-of-the art applied, and established methods rely on the usage of inorganic substances for different processes. Inorganic agents are used from the start to the end of the recycling process of Lithium-Ion Batteries since these are highly reactive and often show high performance. However, the applied inorganic acids are very toxic, lead to hazardous gas developments and emissions, contribute to hazardous waste waters, require special trained staff, equipment, and storage facilities. For example, acidic processes already start at the discharging, are also used for the hydrometallurgical process as well as post-treatment steps wherein the recovered materials are obtained. The applied highly toxic inorganic acids are also highly acidic leading to complex process demands. Wherein the present invention does not rely on inorganic acids but replaces many acidic process steps with alternatives, e.g. as described above for the discharging, and implements alternative and more environmentally friendly acids like organic acids. Additionally, the applied inorganic acids for chemical separation steps can also be replaced by organic acids which further decrease the toxic health risks for operators. Therefore, the present application provides a safer and environmentally friendlier recycling process for Lithium-Ion Batteries.

### Description of the Drawings

Exemplary embodiments of the Lithium-Ion Battery recycling method according to the invention are illustrated in the attached drawings in which:

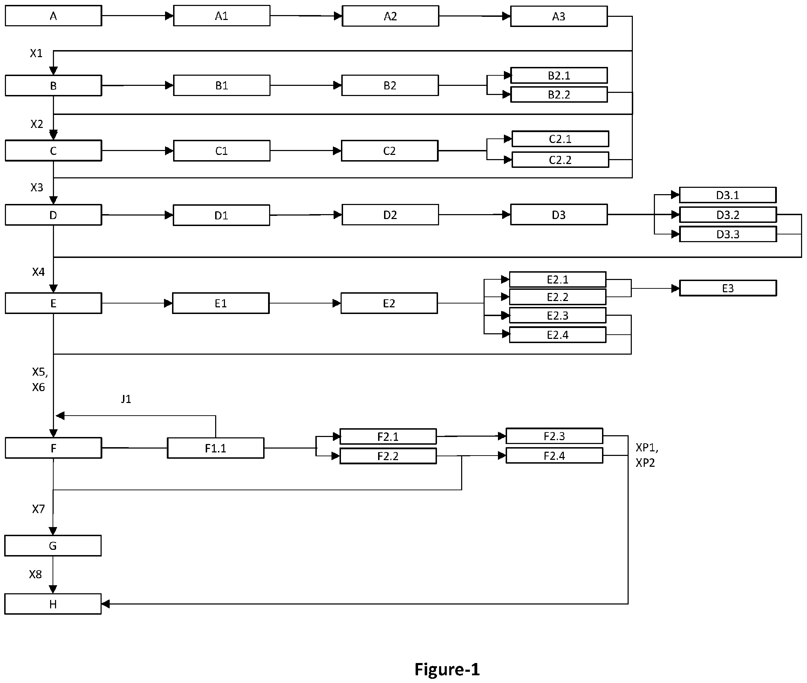

**Figure 1****:** Flowchart of the Lithium-Ion Battery recycling method with respect to an exemplary embodiment of the invention.
**Figure 2****:** Flowchart of the step 5 of the method with respect to an exemplary embodiment of the invention.

The process in the flowchart is described by vertical lines along the main process steps with capital letters without numbering and subprocess steps along the horizontal lines with capital letters and numbering. The parts in said figures are individually referenced as following.
- A: Preparation of Lithium-Ion batteries
- A1: State of Health (SoH) check
- A2: State of Charge (SoC) check
- A3: Discharging Lithium-Ion batteries (packs, modules, cells)
- B: Dismantling the Lithium-Ion battery pack
- B1: Removing the lid of Lithium-ion battery pack
- B2: Disassembling and separating the Lithium-ion battery pack components
- B2.1: Collecting and obtaining reusable Lithium-ion battery pack components
- B2.2: Collecting and obtaining Lithium-Ion battery modules
- C: Dismantling the Lithium-ion battery module
- C1: Opening the Lithium-ion battery module
- C2: Disassembling and separating the Lithium-ion battery module components
- C2.1: Collecting and obtaining reusable Lithium-ion battery module components
- C2.2: Collecting and obtaining Lithium-ion battery cells
- D: Dismantling Lithium-ion battery cells
- D1: Opening the Lithium-ion battery cell
- D2: Removing the electrolyte
- D3: Disassembling and separating Lithium-ion battery cell components
- D3.1: Collecting and obtaining the separator
- D3.2: Collecting and obtaining the anode
- D3.3: Collecting and obtaining the cathode
- E: Removing the binding agent and residual electrolyte of cathodes and anodes
- 1: Processing of cathodes and anodes by thermal treatment
- E2: Separation of active material and collector foils for anodes and cathodes
- E2.1: Collecting and obtaining aluminum foil (Cathode collector)
- E2.2: Collecting and obtaining copper foil (Anode collector)
- E2.3: Collecting and obtaining active material of anode
- E2.4: Collecting and obtaining active material of cathode
- E3: Cleaning the obtained collector foils of anode and cathodes
- F: Chemical recovery of active materials of anodes and cathodes
- F1.1: Hydrometallurgical processing of active materials with organic acid
- F2.1: Recovered active material of anode
- F2.2: Recovered active material of cathode
- F2.3: Posttreatment to obtain usable active material of anode as precursor
- F2.4: Posttreatment to obtain usable active material of cathode as precursor
- G: Chemical separation of cathode active materials from Lithium-Ion Batteries
- G1: Separation of cathode active materials of binary Lithium-Ion Battery chemistries
- G1.1: First separation step of cathode active material
- G1.2: Last separation step of cathode active material
- G2: Separation of cathode active materials of ternary Lithium-Ion Battery chemistries
- G2.1: First separation step of cathode active material
- G2.2: Second separation step of cathode active material
- G2.3: Third separation step of cathode active material
- G2.4: Last separation step of cathode active material
- GA. 1: Extraction and filtration of first separated cathode active material from Lithium-Ion Batteries
- GA.2: Extraction and filtration of second separated cathode active from Lithium-Ion Batteries
- GA.3: Extraction and filtration of third separated cathode active material from Lithium-Ion Batteries
- GA.4: Extraction and filtration of last separated cathode active material from Lithium-Ion Batteries
- GB.1: Posttreatment step for first separated cathode active material from Lithium-Ion Batteries
- GB.2: Posttreatment step for second separated cathode active material from Lithium-Ion Batteries
- GB.3: Posttreatment step for third separated cathode active material from Lithium-Ion Batteries
- GB.4: Posttreatment step for last separated cathode active material from Lithium-Ion Batteries
- H: Drying and packaging
- J1: Re-use of leaching agent
- J2: Re-use of extraction agent for first cathode active material separation process
- J3: Re-use of extraction agent for second cathode active material separation process
- J4: Re-use of extraction agent for third cathode active material separation process
- X1: Discharged Lithium-ion battery pack
- X2: Discharged Lithium-ion battery module
- X3: Discharged Lithium-ion battery cell
- X4: Discharged and disassembled anode and cathode
- X5: Active materials of anode
- X6: Active materials of cathode
- X7: Recovered cathode active materials
- X8: Individual recovered and separated cathode active material elements
- X9: Leach liquor with cathode active material ions from Lithium-Ion batteries
- X10: Leach liquor with one less cathode active material ion
- X11: Leach liquor with two less cathode active material ion
- X12: Leach liquor with only Li ions
- X13: Product of first recovered material from Lithium-Ion Battery
- X14: Product of second recovered material from Lithium-Ion Battery
- X15: Product of third recovered material from Lithium-Ion Battery
- X16: Product of last recovered material from Lithium-Ion Battery
- XP1: Recovered precursor anode material after leaching
- XP2: Recovered precursor cathode material after leaching

### Detailed Description of the Invention

To overcome the aforementioned challenges of the industry and disadvantages of the state-of-the-art applied methods; the following method is proposed and described especially for Lithium-Ion Battery packs of electrical vehicles (EVs), whereas other Lithium-Ion Batteries of other applications such as E-Bikes, E-Scooters, Notebooks, Mobile phones, etc. or from different builds, e.g. modules and cells, can be recycled by this method as well. The invention and process describe a comprehensive approach for the recycling of raw materials from Lithium-Ion Batteries including various input streams for EV packs, modules, and Lithium-Ion Battery cells. Other types of Lithium-Ion Batteries except Lithium-Ion Battery EV packs can be integrated into the recycling process stream after the pretreatment and discharging in their respective process steps according to their built type, e.g. modules (C) or cells (D). Additionally, the invention can process all common binary Lithium-Ion Battery chemistries like LCO, LMO, LNO and ternary Lithium-Ion Batteries like NMC and LNMO with different internal stoichiometric compositions, Lithium-Ion Batteries of different applications and all major Lithium-Ion Battery cell types like cylindrical, pouch and prismatic cells.

The present invention relates to a recycling method of Lithium-ion Batteries, especially based on dry discharging wherein the discharged energy is reused, dismantling and disassembling as mechanical pretreatment and organic acid leaching for the chemical recovery. The method comprises the following steps:
Step 1: Preparation step (A) which comprises a diagnostic tool and discharging step (preferably dry discharging) of Lithium-Ion Batteries (A3).
Step 2: Dismantling, disassembling, separating, and collecting processes for Lithium-Ion Batteries which comprises dismantling the Lithium-Ion Battery casings, disassembling the Lithium-Ion Batteries part-by-part without any crushing or shredding process for any materials involved and thus separating and collecting all relevant parts down to the Lithium-Ion Battery cell components like cathode (positive electrode) with its respective active material composition, anode (negative electrode) with its respective active material composition, separator, and electrolyte; next to the collection of other undamaged and reusable materials that are implemented in the Lithium-Ion Batteries system e.g. battery pack, casing, cables, PMS, PCB's (B, C and D).
Step 3: Removal of the binding agent between anode and cathode (E) to separate the active materials of the cathode and/or anode from their respective metallic collector foils individually by either thermal, mechanical, or chemical treatments or by any combination of these methods without introducing any impurities or strong deteriorations and removing any residual electrolyte.
Step 4: Chemical recovery of active materials (F) of cathodes and anodes separately with environmentally friendly hydrometallurgical operations with high yield rates, such as leaching in organic acid solutions (F1) with or without reducing agents to obtain a leaching liquor with all target materials of the input material (e.g. cathode active material metals) dissolved completely or partly; wherein the chemical recovery of active materials is continuable to obtain either the active material elements individually or obtain a chemical precursor agent of anode or cathode materials.
Step 5: Chemical separation and processing of cathode and anode active materials inside the leaching liquor separately down to their individual chemical elements as individual products by stepwise methods with reusable agents (G).
Step 6: Cleaning, drying, packaging (H) and preparation processes of the obtained and separated materials from the recycling process as finishing steps of the recycling process for Lithium-Ion Batteries. The obtained products after the final steps are prepared for re-use, re-sale, or further processing as products.

In step 1, preparation of Lithium-Ion Batteries for the discharging process (A) is performed, in order to reduce the risk of thermal runaway, fire or other possible danger potentials during processing; thus, disarming the charge and threat potential of the Lithium-Ion Batteries. This step (step 1) considers Lithium-Ion Battery packs, modules and cells and at least comprises the following preferably discharging procedure:
State of Health check (A1); which comprises at least one of optical and/ or electrical and/ or mechanical examination, in order to classify the Lithium-Ion Batteries and determine their status for further processing. This process step is important to determine whether the Lithium-Ion Battery is healthy, to determine its built type, its implemented technology, and therefore determine the most suited and most efficient processing route, or more precise, the required discharging setup. In a preferred embodiment, with respect to the result of the state of health check, it is determined whether the Lithium-Ion Battery is suitable for recycling or whether it can be used for a second life usage.
state of charge check (A2); where the state of charge of the Lithium-Ion Battery is analyzed in order to determine the rest amount of electrical energy / residual voltage still stored/ available in the Lithium-Ion Battery. This analysis gives the necessary information for the parameters about the following discharging step; like required duration and discharge current to be applied. Discharging the Lithium-Ion batteries (A3) by electrical means wherein preferably currents of 2 to 20 Ampere and a duration of 1 to 120 minutes are applied in order to discharge the Lithium-Ion Battery. The amount of current and discharging duration within the given limits is determined with reference to the previous step; according to the determined rest amount of electrical energy stored in the Lithium-Ion Battery. The Lithium-Ion Battery is preferably discharged under the critical voltage level for processing of 2 Volts and most preferably to a voltage level of about 0.5 V for every Lithium-Ion Battery module. Without discharging the Lithium-Ion Battery lower than the critical integrity voltage level (which is about 0.5 V), the treatment of the Lithium-Ion Battery would be too dangerous based on carrying the risk of thermal runaways, short circuits and inflaming when further processed. In a preferred embodiment, the discharging energy that is obtainable in step 1 will be either directly used to power the recycling processes further steps, re-introduced to the grid, used to charge other applications of Lithium-Ion Batteries (e.g. second life applications) or used for other applications (like EV charging stations) whereby the discharged energy will not be lost.

The whole step 1 (A) or at least discharging the Lithium-Ion Battery step (A3) is partly or fully automated. Furthermore, a special pre-process is needed for Lithium-Ion Batteries that are introduced to the recycling process as Lithium-Ion Battery packs. The Lithium-Ion Battery packs need to be opened whereby the Lithium-Ion Battery modules need to be disconnected from the Lithium-Ion Battery pack in order to discharge every single Lithium-Ion Battery module of the Lithium-Ion Battery pack to guarantee a safe process, and to bypass the BMS of the battery pack while keeping the structural integrity of Lithium-Ion Batteries intact. Opening the Lithium-Ion Battery pack can be performed manually or automatically by releasing the joints, closures, screws and/ or cutting the enclosing case. The suitable method will be determined from the preparation step (step 1) during the State of Health check (A1).

After step 1, the discharged Lithium-Ion Battery (pack: X1, module: X2, cell: X3) is manually or automatically transferred to the respective dismantling process step (pack: B, module: C, cell: D) given above as Step 2.

The whole step 2 for an EV Lithium-Ion Battery pack preferably comprises the following sub-steps:
Dismantling and disassembling the Lithium-Ion Battery pack down to Lithium-Ion Battery modules (B) which are collected and obtained next to other reusable Lithium-Ion Battery pack components;
Dismantling and disassembling the Lithium-Ion Battery modules down to Lithium-Ion Battery cells (C) which are collected and obtained next to other reusable Lithium-Ion Battery module components;
Dismantling and disassembling the Lithium-Ion Battery cells down to the Lithium-Ion Battery cell components (D) like cathode, anode, separator, and electrolyte with minimal impact on the cell components integrity, high yield, and pureness rates.

As will be given in detail, during the disassembling process, Lithium-Ion Batteries are disassembled primarily by mechanical means, but the process can be supported by thermal and/ or optical systems and like thermal, thermomechanical, chemical, thermochemical, or mechano-chemical means

Dismantling and disassembling the Lithium-Ion Battery pack (B) down to Lithium-Ion Battery modules: the manual or automated dismantling and disassembling of the Lithium-Ion Battery pack is necessary in order to save recyclable and valuable Lithium-Ion Battery pack components like aluminum, steel, copper, cables, electronics, plastics, etc. This procedure comprises:
- When the Lithium-Ion Battery pack case is opened, the lid is removed manually or automatically and collected, thus revealing the Lithium-Ion Battery pack's interior and components (B1).
- Disassembling and separating the Lithium-Ion Battery pack components (B2); which comprises sorting the components manually or automatically into
   ∘ further recyclable or re-usable Lithium-Ion Battery pack components (B2.1): e.g., Copper, Aluminum, Cables, Plastic, mixed metals, and other parts than the modules that are further sorted, processed, and prepared for re-use in other applications (e.g. as re-furbishing) or for sale.
   ∘ Lithium-Ion Battery modules (B2.2): the discharged Lithium-Ion Battery modules (X2) are checked for their internal voltage again and transported (manually or automatically) to the next recycling process step (C) after validating the non-critical voltage based on possible voltage relaxation effects. Lithium-Ion Battery modules are the components that need to be further disassembled and processed in order to reach the Lithium-Ion Battery cells in which the valuable materials are implemented.

Dismantling and disassembling the Lithium-Ion Battery modules (C) down to the Lithium-Ion Battery cells: the manual or automated disassembling of the Lithium-Ion Battery module is necessary to save further recyclable and valuable components. Furthermore, it is necessary to reach the Lithium-Ion Battery cells and cell component materials without damaging, deteriorating, or contaminating them as these are the most valuable materials of the Lithium-Ion Battery. This procedure comprises:
- Opening the Lithium-Ion Battery module (C1) manually or automatically;
- Disassembling and separating the Lithium-Ion Battery module components (C2) manually or automatically into
   ∘ Further recyclable or re-usable components (C2.1): e.g., Copper, Aluminum, Cables, Plastic, mixed metals, etc. that are further sorted and processed and;
   ∘ Lithium-Ion Battery cells (C2.2) that can have one of three different shapes/ builds: pouch, prismatic, cylindric. The discharged Lithium-Ion Battery cells (X3) are transported manually or automatically to the next recycling process step (D). Lithium-Ion Battery cells are the components that need to be further disassembled and processed in order to obtain the anode, cathode, and further components in which the valuable materials are.

Dismantling and disassembling the Lithium-Ion Battery cells (D) down to the Lithium-Ion Battery cell components like cathode, anode, separator, and electrolyte: The manual or automated dismantling and disassembling of the Lithium-Ion Battery cell is necessary in order to save valuable components and materials at high quantities and qualities and to minimize required treatment steps. By utilizing process steps like dismantling and disassembling and not relying on shredding, process steps like magnetic separation, sieving and floatation can be discarded. Furthermore, the following chemical processing will achieve higher yields and pureness if the quality and pureness of the input materials like anode and cathode are obtained at the highest purity level possible which is possible with dismantling and disassembling. This procedure comprises:
- Opening the Lithium-Ion Battery cells (D1) either manually or automatically in a protected and closed surrounding to prevent the release of hazardous gas emissions and as a safety precaution against other threats.
- Extracting or removing the electrolyte (D2) by washing the opened cells with liquids, using supercritical fluids, or using CO2 gas or by thermal measures when the Lithium-Ion Battery cell is opened and the separator foil has been removed prior to the thermal measure, e.g. heating in a vacuum oven or furnace under inert gas environment at elevated temperatures for a period of time. The extraction and removal of the electrolyte is necessary in order to further process the active materials of the anode and cathode based on the liquid state of the electrolyte, which would disturb the following separation process. The electrolyte does not necessarily need to be obtained or recovered but needs to be removed before further processing.

- Disassembling and separating the Lithium-Ion Battery cell components (D3): when the electrolyte is extracted, the inner components and the case of the Lithium-Ion Battery cells are separated when using non-thermal preprocessing in (D2); separating and sorting parts/ products to:
   ∘ Separator (D3.1): the separator is a plastic component in the Lithium-Ion Battery cell that avoids short circuits during the charge and discharge process. After the separation, separators can be collected and further processed.
   ∘ Anode (D3.2): the anode is the negative collector of the Lithium-Ion Battery cell and receives Lithium-ions from the cathode during a charging process. The main components of the anode are a collector foil (usually copper) a binding agent (usually PVFD) and the active material (usually graphite composition, or alternatively silicon composition). The anode is taken to the next process step in order to remove the binding agent that is connecting the collector foil and the active material; and
   o Cathode (D3.3): The cathode is the positive collector of the Lithium-Ion Battery cell and sends Lithium-ions to the anode during a charging process. The main components of the cathode are a collector foil (usually aluminum), a binding agent (usually PVFD) and the active material (different compositions of Ni, Mn, Co, Fe, P, Li, or as in our case basically LCO, LNO, LMO, NMC). The cathode is taken to the next process step in order to remove the binding agent that is connecting the collector foil and the active material.
- Preferably transporting (manually or automatically) the discharged and disassembled anode and cathode (X4) to the next main process step (E).

The manual or automated dismantling and disassembling of the Lithium-Ion Batteries step by step as given above is necessary to save valuable components and active materials (of cathodes and anodes alike) that are targeted by the recycling process and need to be recovered in order to be able to reuse them, and further increase the recycling efficiency and effectiveness. Furthermore, dismantling and disassembling are necessary to obtain the highest material input quantity and quality of the cell components like the anode, cathode, and further components. The separation of the Lithium-Ion Battery cell components (separator, electrolyte, anode, cathode) is necessary to reach a separated process stream for anode and cathode active materials in order to increase the purity of the final recovered elements.

In step 3, the binding agent between the anode and cathode is removed (E) to separate the active materials of the cathode and/or anode from their respective metallic collector foils in order to further recover the active materials in the chemical organic leaching process. Besides the removal of the binding agent also some residual electrolytes inside the respective anodes and cathodes will be removed as well. This step preferably comprises the following sub-steps:
- Thermal treatment (E1): the thermal dissolvement with elevated temperatures is important in order to 1) remove the binding agent and 2) to increase the surface of valuable active material elements and 3) remove any residual electrolyte. The binding agent can be dissolved/ evaporated with a thermal procedure like pyrolysis by heating the anode and cathode composition in a vacuum or inert gas environment furnace up to a temperature between 250°C and 650°C and holding these temperatures for durations of 10 to 120 minutes with a temperature increase rate (heating rate) of 5 to 15 °C per minute wherein if necessary, a nitrogen gas stream is used.
- Separation of active material and collector foils (E2): After the binding agent is removed, the anode and cathode are processed to separate their active materials from the corresponding metallic collector/ foil. This separation can be done by means of mechanical, chemical, gravitation or any combination of these. E.g. the separation is possible with scrapping off the active material or shaking it off from the collector (mechanical process) or washing the active material off in a water bath or stream (chemical process) with successive drying. After the separation of the active materials of anodes and cathodes from their respective collector foils, the components are sorted into the parts/ products as follows:
   o Aluminum foil (E2.1) from cathode collector,
   o Copper foil (E2.2) from anode collector,
   o Active material of anode (E2.3) consisting of a graphite or silicon composition,
   o Active material of cathode (E2.4), e.g., consisting of chemical element combinations like Nickel, Manganese, Cobalt, and Lithium but not limited to these chemical elements;
- Cleaning process of the obtained collector foils of anode and cathode (E3): the separated collector foils need to be cleaned to improve the material value before packaging and selling. This can be performed by washing them in distilled/ deionized water under ultrasonic-assisted measures or without. The aluminum foil and the copper foils are processed in this step.
- Preferably, the obtained active material of anode (X5) and active material of the cathode (X6) are transported manually or automatically, to the next process step (F) and are processed separately.

The manual or automated separation of the Lithium-Ion Batteries cell active materials from their collector foils is necessary to save valuable components and active materials in high quantities and qualities without the need for further processing steps; whereby the separated active materials can be introduced into their respective processing streams directly.

In step 4, chemical recovery of active materials of cathode and anode (F) is provided. The chemical organic recovery of the active materials is achieved by dissolving the obtained solid mass of active materials in a reusable leach liquor (J1) from which the individual materials can be recovered, thus improving the value of recovered materials from the recycling process as reusable materials. The chemical recovery of the anode (graphite, silicon or other) and cathode materials (e.g., based on compositions of Nickel, Cobalt, Manganese, Lithium) are performed in separate reactors, in physically separated processes that are independent of each other and will not be combined, wherein cathode materials with similar chemistries like NMC and LCO are mixable. The chemical recovery consists preferably of the following operations:
- Hydrometallurgical processing with organic acid (F1.1) like citric acid, malic acid, and/or formic acid as leaching agents: Leaching the active materials with organic acids improves the environmental impact and process efficiency. It generates less hazardous gases while it increases the recycling efficiency and has a lower toxicity. The concentration of the leaching agents within the leaching solution is preferably set from 0.5 M to 3.0 M. The leaching process is conducted at temperatures from 60.1°C to 99.9°C for a duration between 15 to 120 minutes. The solid to liquid ratio is set to be between 10 - 120 g/L. This organic leaching process can be accompanied with or without organic or inorganic reduction agents to increase the recovery efficiency, output rate, and processing performance. The reduction agent comprises at least one of hydrogen peroxide, sodium thiosulfate, sodium bisulfite, D-glucose, sucrose, or ascorbic acid and is added to the leaching solution with a concentration of 0.1 to 10 vol%. Resulting from this process, the following materials are obtained:
   ∘ Recovered active material of anode (F2.1) from anode leaching process, which is a composition of graphite or silicon or mixed graphite and silicon and can be processed to a precursor (F2.3) which can manually or automatically be transferred to the drying and packaging step (H) where the final anode active material product is obtained, e.g. graphite or silicon or mixed graphite and silicon products (XP1).
   ∘ Recovered cathode active material (F2.2) from cathode leaching process; which consists of compositions of different cathode active material elements that can be processed to a precursor which can be considered as a final re-usable product (F2.4), extracted from the process chain and manually or automatically transferred to the drying and packaging step (H) where the precursor material with a fixed stoichiometric composition (XP2) is obtained and can be further used in new Lithium-Ion Battery cell productions with the limitation of using the same composition ratio/ stoichiometric composition. However, in order to improve the usability, preferably the recovered cathode active material (F2.2) is further processed in the separation process (G). In this case, preferably the recovered cathode active material (X7) is transferred to the next process (G).

The chemical recovery process is applicable for Lithium-Ion Batteries from one source or application whereas it is also applicable for mixed Lithium-Ion Battery streams from different applications and chemistries, like NMC-111, NMC-811, NMC-532, etc. or chemistries that rely on elements that are present in the NMC chemistry, like LCO, LNO, LMO batteries.

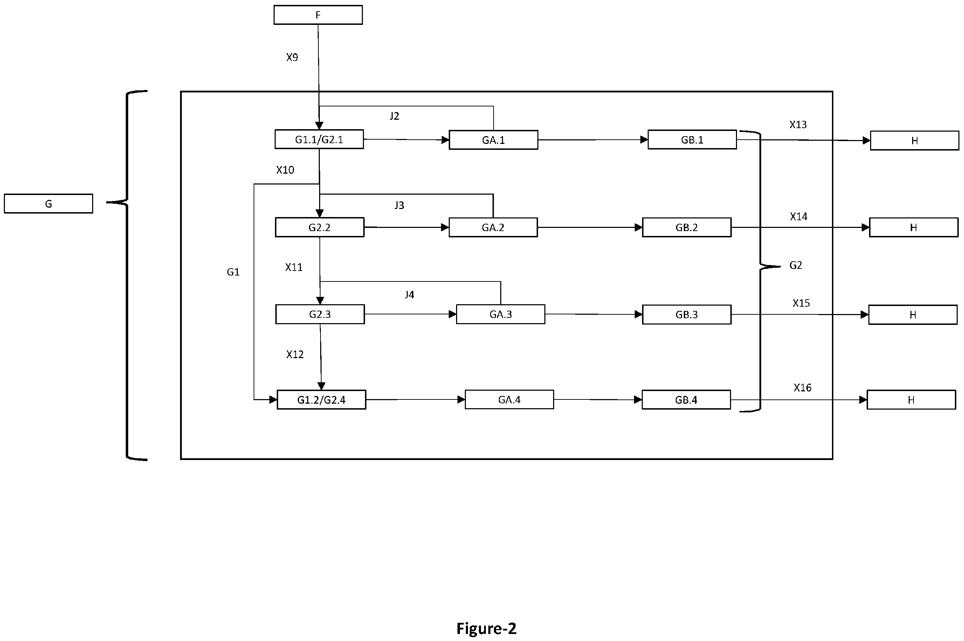

After step 4, the recovered/ leached cathode active materials (X7) can be transported manually or automatically to a next process step; step 5; to separate the recovered cathode active material composition into its chemical elements to increase the re-usability and flexibility of the process output materials. Therefore, after step 4 the following step 5 is performed for the recovered cathode active material:
Step 5: Chemical separation of cathode active materials from Lithium-Ion Batteries (G) is performed by sequential chemical separation procedures of target materials from the pregnant leach liquor with metal ions like Lithium, Nickel, Cobalt and/or Manganese, in arbitrary order (the exemplary embodiment given in Figure 2 is not fixed to a separation order but differentiates the recycling of solely binary and ternary systems wherein additional extraction process steps are included), which comprises the following:
- Sequential separation of individual metals from the leaching liquor to obtain a carrier solution with the target metal ions (solely binary systems: G1.1 and G1.4, else G2.1 to G2.4);
- Transferring the target metals from the first carrier/ extraction solution into a second carrier solution (solely binary systems: GA.1 and GA.4, else GA.1 to GA.4) and obtaining the previously applied agents (J2, J3, J4) required to create the first carrier/ extraction solution, whereby the agents can be recovered and reintegrated into the chemical extraction process (in G);
- Obtain the target metal from the second carrier solution and filtration process to separate the obtained solidified/ precipitated metal material from the second carrier solution (for solely binary systems: GB.1 and GB.4, else GB.1 to GB.4).

In a preferred embodiment, chemical separation of cathode active material elements comprises the following:
- Sequential separation of metals from the leach liquor individually to obtain a first carrier solution with only one target metal ion type;
- Separating the first carrier solution from the residual leach liquor;
- Transferring the target metal from the extracted first carrier solution into a second carrier solution and obtaining the previously applied extractant for reuse;
- Obtaining the target metal from the second carrier solution as a solid residue by precipitation and filtration.

In another preferred embodiment, the chemical separation of cathode active material elements comprises:
- Sequential separation of metals from the leach liquor individually to obtain a solid residue with only one target metal ion type in the solid residue compound;
- Filtration of the solid residue from the residual leach liquor;
- Transferring the target metal from the solidified residue into a carrier solution and obtaining the previously applied extractant for reuse;
- Obtaining the target metal from the carrier solution as a solid residue by precipitation and filtration.

In a preferred embodiment of the invention, as given in Figure 2; step 5, which is the chemical separation of cathode active material elements (G) comprises the following:
- Separation of cathode active materials of binary Lithium-Ion Battery chemistries (G1): This separation process is for cathode active material composition based on Lithium and another transition metal (e.g., Cobalt or Manganese or Nickel).
   ∘ First separation step of cathode active material (G1.1); to separate the transition metal from the leach liquor.
   ∘ Last separation step of cathode active material (G1.2); to extract the Lithium from the residual leach liquor.
- Separation of cathode active materials of ternary Lithium-Ion Battery chemistries (G2): This separation process is for cathode active material composition based on Lithium and combinations of transition metals like Cobalt, Nickel and/ or Manganese.
   ∘ First separation step of cathode active material (G2.1); to separate one transition metal from the leach liquor.
   ∘ Second separation step of cathode active material (G2.2); to separate another transition metal from the leach liquor.
   ∘ Third separation step of cathode active material (G2.3); to separate another transition metal from the leach liquor.
   ∘ Last separation step of cathode active material (G2.4); to extract the Lithium from the residual leach liquor.

As given in Figure 2, an exemplary leach liquor comprising a ternary Lithium-Ion Battery chemistry with Nickel, Cobalt, Manganese, and Lithium ions (X9) is coming from chemical recovery of cathode active material (F2.2) step; and with the separation of first transition metal, the remaining leach liquor (X10) carries one less type of transition metal; the leach liquor after the second separation (X11) carries two less transition metals and the leach liquor before the last separation (X12) only or mainly carries Lithium ions.

In step 5, the chemical separation process of valuable metals (cathode active material elements) from the leaching liquor (G) is divided into separation steps for each chemical element present in the pregnant leach liquor. The separation can be done via direct precipitation from the leach liquor into a solidifying compound and/ or by solvent extraction (liquid-liquid extraction) in arbitrary orders. In a preferred embodiment, after filtration and separation of one component from the leach liquor, the former solution is divided into a carrier solution or precipitate and residual leach liquor, which will be further used in the next process step to separate the remaining chemical elements from the leach liquor.

The following extractants can be used (with varying concentration or volume content variation) with the phase stabilizer Tributyl phosphate (TBP) and diluent kerosene for separation of valuable metals from the leaching liquor:
Chemical extractants, dilutants and solvents for liquid-liquid extraction:
- Cyanex272,
- D2EHPA,
- PC88A,
- Versatic10 Neo-decanoic acid,
- Trioctylphosphine oxide (TOPO),
- Benzoyltrifluoroacetone (HBTA)
- Trioctyl amine (TOA),

The chemical precipitation extractants do not require a phase stabilizer and kerosene as diluent. Chemical extractants for precipitation:
- Dimethylglyoxime (DMG),
- Sodium phosphate, Sodium sulfate, Sodium hydroxide, Sodium carbonate,
- Ammonium oxalate.

In a preferred embodiment, step 5 comprises at least one of the "Separation of cathode active materials of binary Lithium-Ion Battery chemistries" (G1) or "Separation of cathode active materials of ternary Lithium-Ion Battery chemistry" (G2) active materials processes given below with the following sub-steps and details:
Separation of cathode active materials of binary Lithium-Ion Battery chemistries (G1), exemplary for LCO (LiCoO2), whereby the transition metal Cobalt is primarily extracted from the leaching liquor followed by the extraction of Lithium. However, the reverse process of first extracting Lithium, then Cobalt followed by a final Lithium extraction is also possible whereas different optimized process conditions are selected. The separation step includes the recovery of metal ions from the leach liquor into an organic phase by chemical reaction or direct precipitation, whereby the resulting solution or compound with the extracted metal ion is separated from the remaining leaching solution which carries the remaining transition metals and is processed further to separate the other metal ions. The separated solution or compound with the recovered metal ions is further treated in the extraction and filtration step to transfer the target metal into another phase and recover the initially used agent for the solvent extraction process. The recovered metal ions are then precipitated, filtered, and obtained as a compound which can be further processed in posttreatment steps. The above-mentioned process can be laid out also for other binary Lithium-Ion Battery chemistries like LNO and LMO wherein the separation process for the respective transition metal can be taken from the below described process for ternary Lithium-Ion Batteries. In detail, the recovery of the cathode active materials of LCO from leach liquor comprises:
- Cobalt is selectively separated from the leaching solution (G1.1) via precipitation or solvent extraction. Depending on the selected method, other reagents/ extractants can be utilized. For instance, ammonium oxalate (0.1-2 mol/L) selectively precipitates cobalt oxalate hydrate (CoC2O4·2H2O). The optimal process conditions in a reactor under constant stirring and heating are given by: temperature between 15 - 30°C, at pH levels between 4 - 7. The chemical reaction time is between 20 - 90 min long. Alternatively, Cobalt is separated from the leaching solution through solvent extraction (GA. 1). For this, a chemical extractant like Cyanex272, PC-88A and/or Cyanex272 with tributyl phosphate (TBP) can be used to extract Cobalt selectively. This chemical reaction takes place between 3 - 6.5 pH. Afterwards either the obtained cobalt oxalate hydrate or organic solution which contains the extracted metal in ionized form are separated from the residue leach liquor (GA.1) which contains the other metal ions by filtration or other means. Afterwards, the separated medium that carries the first extracted cathode active material (either as solid or liquid) is treated with acids like sulfuric acid and afterwards with sodium carbonate or sodium sulfate as part of the posttreatment (GB. 1).
- Lithium is selectively separated from the leaching solution (G1.2) preferably by precipitation but can also be processed by solvent extraction. As a chemical reagent saturated sodium carbonate can be used at temperatures around 100 °C, at pH=11 - 13, for a duration of 20 - 60 min, ideally with a molar ratio of Lithium-ions to sodium carbonate between 0.2 to 1.5 to directly treat the Lithium ions carrying leach liquor (GB.4). Another chemical reagent to separate Lithium from leaching liquor is sodium phosphate with 0.2 - 2 mol/L. Lithium can be extracted by DEHPA with 0.06 mol·L-1 DEHPA, Organic to - aqueous solution ratio (O/A) = 1:1 and pH= 2 - 4. Alternatively, Lithium is extracted from the leaching liquor under conditions of pH= 7 - 9, 0.4 mol·L-1 HBTA + 0.4 mol·L-1 TOPO + kerosene, O/A= 1:1, 70% saponified and extraction for 2 min. The Lithium carrying solution (GA.4) is then filtered and separated from the residual leach liquor and treated with sodium carbonate in the posttreatment (GB.4).

Separation of cathode active materials of ternary Lithium-Ion Battery chemistry (G2), whereby the separation order for the transition metals Nickel, Cobalt and Manganese are variable. Hence, the following possible separation orders are possible:

| First separation step | Second separation step | Third separation step |
|---|---|---|
| Nickel | Manganese | Cobalt |
| Nickel | Cobalt | Manganese |
| Manganese | Nickel | Cobalt |
| Manganese | Cobalt | Nickel |
| Cobalt | Manganese | Nickel |
| Cobalt | Nickel | Manganese |

Whereas Lithium is frequently extracted at last but there are also extraction conditions whereby Lithium can be extracted first and then again as the last extraction step. The following description describes the process for the separation of a ternary Lithium-Ion Battery with the separation order of Cobalt - Nickel - Manganese - Lithium, wherein the laid-out methods for each individual material can be used for other orders as well. The separation step includes the recovery of metal ions from the leach liquor into an organic phase by chemical reaction or direct precipitation, whereby the resulting solution or compound with the extracted metal ion is separated from the remaining leaching solution which carries the remaining transition metals and is processed further to separate the other metal ions sub sequentially. The separated solution or compound with the recovered metal ions is further treated in the extraction and filtration step to transfer the target metal into another phase and recover the initially used agent for the solvent extraction process. The recovered metal ions are then precipitated, filtered, and obtained as a compound which can be further processed in posttreatment steps. The above-mentioned process can be laid out for mixtures of binary and ternary Lithium-Ion Battery chemistries or for solely ternary Lithium-Ion Batteries. In detail, the recovery of the cathode active materials from leach liquor of at least ternary Lithium-Ion Batteries comprises:
The separation steps for the transition metals to organic phases or direct precipitation (G2.1, G2.2, G2.3, G2.4), the extraction and filtration steps of solutions or compounds with the separated metal ions (GA. 1, GA.2, GA.3, GA.4) to transfer the target metal into another phase and recover the initially used agent for the solvent extraction process. Afterwards, the extracted metal ion is obtained as a compound by posttreatment steps (GB.1, GB.2, GB.3, GB.4). The following procedure is exemplarily described for the ternary Lithium-Ion Battery chemistry of NMC and exemplary separation order of Cobalt - Nickel - Manganese - Lithium:
- Cobalt is selectively separated from the leaching solution (G2.1) via precipitation or solvent extraction. Depending on the selected method, other reagents/ extractants can be utilized. For instance, ammonium oxalate (0.1-2 mol/L) selectively precipitates cobalt oxalate hydrate (CoC2O4·2H2O). The optimal process conditions in a reactor under constant stirring and heating are given by: temperature between 15 - 30°C, at pH levels between 4 - 7. The chemical reaction time is between 20 - 90 min long. Alternatively, Cobalt is separated from the leaching solution through solvent extraction (GA. 1). For this, a chemical extractant like Cyanex272, PC-88A and/or Cyanex272 with tributyl phosphate (TBP) can be used to extract Cobalt selectively. This chemical reaction takes place between 3 - 6.5 pH. Afterwards either the obtained cobalt oxalate hydrate or organic solution which contains the extracted metal in ionized form are separated from the residue leach liquor (GA.1) which contains the other metal ions by filtration or other means. Afterwards, the separated medium that carries the first extracted cathode active material (either as solid or liquid) is treated with acids like sulfuric acid and afterwards with sodium carbonate or sodium sulfate as part of the posttreatment (GB. 1).
- Nickel is selectively separated (G2.2) from the leaching solution/ leach liquor by adding a reagent/ extractant. Nickel is extracted by Dimethylglyoxime (DMG) at concentrations between 0.02 - 0.2 mol/L, in a temperature range of 15 - 30°C, and pH range between 4 - 5 or 7.4 to 10 for a duration of 5 min to 60 min. After the chemical reaction, the Nickel ion solution gets extracted and filtrated (GA.2) whereby Nickel products are obtained by post-treatments (GB.2). The post-treatment (GB.2) includes the treatment with hydrochloric acid between 3 mol/L - 5 mol/L or sulfuric acid. Afterward, Nickel is selectively separated with ammonium hydroxide between 1 - 3 mol/L under a pH range between 2.5 - 5 or by sodium carbonate or sodium sulfate.
- Manganese is selectively separated (G2.3) from the leaching solution via precipitation or solvent extraction. By using chemical reagents like Di-(2-ethylhexyl) phosphoric (D2EHPA) acid and sulfonated kerosene, Manganese ions get separated from the leaching solution (GA.3). D2EHPA is 60 - 85 % saponified by concentrated sodium hydroxide (5 - 13 mol/L). Additionally, tributyl phosphate with 1 - 8 vol% is used. The Manganese-loaded organic phase is separated and filtered from the leach liquor (GA.3) whereby the applied extraction agent is recovered. The obtained Manganese carrying solution is treated with inorganic acid solutions like sulfuric acid and then treated with sodium carbonate or sodium sulfate as part of the posttreatment steps (GB.3).
- Lithium is selectively separated from the leaching solution (G2.4) preferably by precipitation but can also be processed by solvent extraction. As a chemical reagent saturated sodium carbonate can be used at temperatures around 100 °C, at pH=11 - 13, for a duration of 20 - 60 min, ideally with a molar ratio of Lithium-ions to sodium carbonate between 0.2 to 1.5 to directly treat the Lithium ions carrying leach liquor (GB.4). Another chemical reagent to separate Lithium from leaching liquor is sodium phosphate with 0.2 - 2 mol/L. Lithium can be extracted by DEHPA with 0.06 mol·L-1 DEHPA, Organic to - aqueous solution ratio (O/A) = 1:1 and pH= 2 - 4. Alternatively, Lithium is extracted from the leaching liquor under conditions of pH= 7 - 9, 0.4 mol·L-1 HBTA + 0.4 mol·L-1 TOPO + kerosene, O/A= 1:1, 70% saponified and extraction for 2 min. The Lithium carrying solution (GA.4) is then filtered and separated from the residual leach liquor and treated with sodium carbonate in the posttreatment (GB.4).

The separated and extracted cathode active materials (X13, X14, X15, X16) from the respective separation steps that are obtained after the posttreatment (GB.1, GB.2, GB.3, GB.4) are transferred to the next processing step, namely step 6, the drying and packaging step (H) either manually or by automated means.

Following step 5, in the drying and packaging step (H), the final processing is conducted; wherein the drying process of the separated active material elements (X13, X14, X15, X16) and/ or obtained precursor materials (XP1, XP2) is conducted. The drying process is preferably performed in a hermetical facility to suppress oxidation and agglomeration, e.g. inside a vacuum furnace or inert gas furnace, whereby an automated or manual packaging of the final products/ elements into air-tight bags is connected. In a preferred embodiment, the drying duration is set to a period of 0.5 to 8.0 hours, and the drying temperature is set between 50°C to 250°C and preferably to 70°C. Preferably the drying environment is under an inert gas like argon or nitrogen at normal atmospheric pressure.

## Claims

1. A method for recycling Lithium-Ion Batteries, **characterized by** the following process:
- Preparation step which comprises the diagnostics of Lithium-Ion Batteries followed by the opening of the lithium-ion battery pack and the discharging of Lithium-Ion modules and/ or cells,
- Dismantling and disassembling process for Lithium-Ion Batteries which comprises the dismantling of the Lithium-Ion Battery casings and the disassembling of the Lithium-Ion Batteries down to their cell components to obtain the cathode with its respective active material composition, the anode with its respective active material composition, the separator, and electrolyte; and collection of other parts that are implemented in the Lithium-Ion Batteries energy systems,
- Removal of the binding agent between the anode and cathode foils and their respective active material compositions to separate the collector foils of the anode and cathode from their respective active materials individually;
- Chemical recovery of the separated active materials of cathodes and anodes separately with hydrometallurgical operations;
- Individual and subsequential chemical separation and processing of cathode active materials down to their individual chemical elements as individual product.

2. A method of recycling Lithium-Ion Batteries according to claim 1, wherein the initial preparation step comprises:
- State of health check to determine whether the Lithium-Ion Battery is suitable for recycling, to identify the built type and geometry, to prepare the required digital data set for the subsequent discharging process;
- State of charge check in order to determine the rest amount of electrical energy/ residual voltage still stored in the Lithium-Ion battery to determine the necessary processing parameters for the following discharging step;
- Discharging the Lithium-Ion Battery modules by electrical means with a discharging current and discharging duration with respect to the data obtained in the state of health/charge check.

3. A method of recycling Lithium-Ion Batteries according to claim 1 or 2 wherein, the dismantling and disassembling process for Lithium-Ion Batteries comprises the following sub steps:
- Dismantling and disassembling the Lithium-Ion Battery pack down to Lithium-Ion Battery modules and collecting reusable parts and obtaining Lithium-Ion Battery modules;
- Dismantling and disassembling the Lithium-Ion Battery modules down to the Lithium-Ion Battery cells and collecting reusable parts and obtaining Lithium-Ion Battery cells;
- Dismantling and disassembling the Lithium-Ion Battery cells down to the Lithium-Ion Battery cell components to obtain the Lithium-Ion Battery cell components like cathode, anode, separator, and electrolyte.

4. A method of recycling Lithium-Ion Batteries according to claim 3 wherein, Lithium-Ion Batteries are dismantled and disassembled with at least one of mechanical, thermal, thermomechanical, chemical, thermochemical, or mechano-chemical means or any other combinations of these methods.

5. A method of recycling Lithium-Ion Batteries according to any of the previous claims wherein, removal of the binding agent and residual electrolyte comprises:
- Thermal treatment for the removal of the binding agent and any residual electrolyte;
- Separation of anode and cathode active material from the collector foils;
- Sorting the components into collector foils, active material of cathodes, and active material of anodes.

6. A method of recycling Lithium-Ion Batteries according to any of the previous claims wherein, the chemical recovery of the anode and cathode active materials is done in physically separated processes that are independent of each other and will not be combined again.

7. A method of recycling Lithium-Ion Batteries according to any of the previous claims wherein, the hydrometallurgical operations comprise leaching the active materials individually in organic acid solutions to obtain a leaching liquor with all target metals of the respective anode or cathode active material input compositions.

8. A method of recycling Lithium-Ion Batteries according to claim 7 wherein, the leaching is conducted with organic acid solutions comprising at least one of citric acid, formic acid, and/or malic acid.

9. A method of recycling Lithium-Ion Batteries according to claims 7 or 8 wherein, the hydrometallurgical or organic leaching process is accompanied with organic or inorganic reduction agents.

10. A method of recycling Lithium-Ion Batteries according to claim 9 wherein, the reduction agent comprises at least one of hydrogen peroxide, sodium thiosulfate, sodium bisulfite, D-glucose, sucrose, or ascorbic acid.

11. A method of recycling Lithium-Ion Batteries according to any of claims 7 - 10 wherein, the chemical separation of the cathode active materials or anode materials comprises the individual chemical separation of the cathode or anode active materials from the leaching liquor.

12. A method of recycling Lithium-Ion Batteries according to claim 11 wherein, chemical separation of cathode active material elements is performed by sequential chemical separation/ extraction procedures of target metals from the pregnant leach liquor with at least one of the metal ions of Lithium, Nickel, Cobalt and/or Manganese, by solvent extraction or direct precipitation in arbitrary order.

13. A method of recycling Lithium-Ion Batteries according to claims 11 or 12 wherein, chemical separation of cathode active material elements comprises,
- Sequential separation of metals from the leach liquor individually to obtain a carrier solution with only one target metal ion type or using direct precipitation methods to obtain a metal ion carrying residue;
- Separating the carrier solution or residue from the leach liquor;
- Transferring the target metal from the extracted carrier solution or residue into another solution and obtaining the previously applied extractant for reuse;
- Obtaining the target metal from the solution as a solid residue by precipitation and filtration.

14. A method of recycling Lithium-Ion Batteries according to any of claims 11 to 13 wherein, after filtration and separation of one material from the leach liquor, the former solution is divided into a precipitate and residual leach liquor, which will be further used in the next process step to separate the remaining components.

15. A method of recycling Lithium-Ion Batteries according to any of previous claims wherein, said Lithium-Ion Battery is any of the Lithium-Ion Battery assemblies like packs or modules of different applications and/or any Lithium-Ion Battery cell of any of the following cell types, either cylindrical, pouch or prismatic cells.
